# EUROPEAN PATENT APPLICATION

(11) **EP 2 264 441 A2**
(43) Date of publication of application: **22.12.2010**
(21) Application number: 10006185.2
(22) Date of filing: 15.06.2010
(51) Int. Cl.: G01N 21/956

(54) **Circuit pattern defect detection apparatus, circuit pattern defect detection method, and program therefor**

(30) Priority: 17.06.2009 JP 2009144713
(71) Applicant: Kabushiki Kaisha TOPCON, Tokyo 174-8580 (JP)
(72) Inventor: Takada, Akira, Tokyo 174-8580 (JP)
(74) Representative: Eisenführ, Speiser & Partner

(57) **Abstract**

The present application provides a defect detection apparatus for a circuit pattern, including: an illumination optical system that irradiates illumination light, having a predetermined polarization condition, onto a detection subject having a circuit pattern formed thereon; a detection device that detects change in the polarization condition of the illumination light between before and after the illumination light passes through the detection subject or between before and after the illumination light is reflected by the detection subject; and a defect detection device that detects a defect of the circuit pattern based on an output of the detection device.

## Description

### BACKGROUND OF THE INVENTION

### 1. Field of the Invention

The present invention relates to a circuit pattern defect detection technique that is superior in detection accuracy.

### 2. Description of Related Art

In methods for detection of defects in photomasks used in production of integrated circuits, a "die-to-die mode" in which pattern images formed repeatedly are compared to each other or a "die-to-database mode" in which an inspection image (die) and a reference image (database), which is obtained from CAD data, are compared to each other. In these modes, defect detection is performed by comparison of images. For example, Japanese Unexamined Patent Application Publications No. H11-72905 discloses a technique for obtaining inspection images in this technical field.

In order to detect a fine defect having a size of a few nanometers or less, high accuracy is required so that small differences of contrast can be detected. However, in conventional techniques, the signal-to-noise ratio of detection information may be limited due to variations contained in illumination light, variation by the effects of interference, variations in accuracy of imaging elements, and the like.

### SUMMARY OF THE INVENTION

An obj ect of the present invention is to provide a technique that can detect defects in circuit patterns with high signal-to-noise ratios.

According to one aspect of the present invention, a defect detection apparatus for a circuit pattern includes: an illumination optical system that irradiates illumination light, having a predetermined polarization condition, onto a detection subject having a circuit pattern formed thereon; a detection device that detects change in the polarization condition of the illumination light between before and after the illumination light passes through the detection subject or between before and after the illumination light is reflected by the detection subject; and a defect detection device that detects a defect of the circuit pattern based on an output of the detection device.

In the defect detection apparatus of the one aspect of the present invention, when illumination light is irradiated on a member (a photomask or the like) having a fine circuit pattern, polarization change occurs in at least one of a case in which the illumination light passes through the member and a case in which the illumination light is reflected by the member,. The defect detection apparatus uses this polarization change. For example, when linearly polarized light having a predetermined polarization direction is irradiated on a member, the polarization change is observed as a phenomenon in which transmission or reflection of linearly-polarized light having a polarization direction perpendicular to the predetermined polarization direction occurs. This phenomenon is generated by the birefringence effect due to a fine circuit pattern. This phenomenon can be understood such that the birefringence effect occurs due to a circuit pattern structure, and linearly polarized light having a polarization direction perpendicular to that of illumination light is thereby generated.

When transmission and reflection of illumination light occur in case of using a photomask or the like as a subject, the above change in polarization is generated in both transmission light and reflection light. When only reflection light from a subject is obtained, the above change is generated in the reflection light. When only transmission light is obtained, the above change in polarization is generated in the transmission light.

The smaller the size of the circuit pattern than the wavelength of the illumination light, the greater (more pronounced) the above change in polarization is. Obviously, when there is a fine defect in the circuit pattern, change in polarization is generated due to the fine defect. Therefore, defect detection can be performed by detection of change in polarization. This is the principle of the one aspect of the present invention.

For example, plural methods are used for detection of change in polarization. For example, when a photomask for IC (Integrated Circuit) memory production, which has a circuit pattern structure in which same circuit patterns are repeatedly formed, is used, distribution conditions of polarization change obtained from circuit patterns proximate to each other are compared, and defects are detected based on difference therebetween. For example, reference distribution data of polarization change, which is used as a reference data, is prepared. In this case, when a circuit pattern has no defect, polarization change occurs due to the circuit pattern itself. Distribution data of polarization change obtained by measurement is compared to the reference distribution data of polarization change which is used as reference information, and defects are detected based on difference therebetween. For example, irregular polarization change, which may not be generated in a typical case, is detected based on symmetry properties of circuit pattern, and defects are detected based on this information.

For example, photomasks for IC production, silicon wafers having a circuit pattern formed thereon, transfer molds for IC production (pressing molds for transfer of a circuit pattern on a resist surface), and the like), and various substrates (other than silicon substrates) having a circuit pattern can be used as a detection subject of the aspect of the present invention.

The circuit pattern may include a device (transistor, capacitor portion, or the like) which forms a circuit and a leader line from the device, connection lines connecting between devices, patterns of insulation region, and the like.

According to a preferred embodiment of the present invention, the illumination optical system irradiates linearly polarized first light, which is the illumination light, onto the detection subject, and the detection device detects linearly polarized second light having a polarization direction perpendicular to that of the linearly polarized first light, thereby detecting the change in the polarization condition of the illumination light between before and after the illumination light passes through the detection subject or between before and after the illumination light is reflected by the detection subject.

The change in the polarization direction, which is caused by a circuit pattern and a defect when linearly polarized light having a predetermined polarization direction is irradiated, may occur the most prominently in a light component having a polarization direction perpendicular to that of the irradiated linearly polarized light. For example, based on the principle, linearly polarized light having an X-direction amplitude direction of the electric field may be irradiated on a photomask, and reflection light generated by reflection on the photomask may be detected. In this case, linearly polarized light having a Y-direction amplitude direction of the electric field, which is perpendicular to the X-direction amplitude direction of the electric field, may be included in reflection light from a portion at which polarization change occurs. On the other hand, linearly polarized light having the Y-direction amplitude direction of the electric field may not be included in reflection light from a portion at which polarization change does not occur. Therefore, in this case, linearly polarized light having the Y-direction amplitude direction of the electric field may be detected, so that the polarization change can be detected with high sensitivity.

According to a preferred embodiment of the present invention, the defect detection apparatus includes: an image acquisition device that obtains an image of the circuit pattern based on one of the illumination light passing through the detection subject and illumination light reflected by the detection subject.

In the defect detection apparatus of the embodiment, the image can be obtained based on the transmission light and the reflection light. This image may be an image obtained by a typical optical imaging method. The image of the circuit pattern can be used for identification and display of defect portion.

According to a preferred embodiment of the present invention, the circuit pattern is a circuit pattern formed on a photomask, the illumination optical system has a transmission type illumination optical system that allows the illumination light to pass through the detection subject, and a reflection type illumination optical system which allows the illumination light to be reflected by the detection subject, the image of the circuit pattern is obtained by using the transmission type illumination optical system, and the change in the polarization condition is detected by using the reflection type illumination optical system.

When the photomask is used, transmission light passing through the circuit pattern formed on the photomask and reflection light reflected by a surrounding portion therearound can be obtained, so that information on the circuit pattern can be obtained from both the transmission light and the reflection light. The light of which the polarization condition is changed can be obtained greater in a case of using the reflection light than in a case of using the transmission light. The optical strength of the image of the circuit pattern can be stronger in a case of using the transmission light than in a case of using the reflection light, and the contrast thereof can be higher in a case of using the transmission light than in a case of using the reflection light (that is, the image of the circuit pattern can be clearer in a case of using the transmission light than in a case of using the reflection light.). Therefore, in the defect detection apparatus of the embodiment, the change in the polarization condition and the image of the circuit pattern can be obtained with high signal-to-noise ratios.

According to a preferred embodiment of the present invention, the defect detection apparatus includes: a position identification device that identifies a position of the defect in the circuit pattern. In the defect detection apparatus of the embodiment, since position information on the defect in the circuit pattern can be identified, information on the generated portion of the defect in the circuit pattern can be obtained.

According to a preferred embodiment of the present invention, the polarization condition of the illumination light includes a first polarization component and a second polarization component of which polarization directions are perpendicular to each other, and the detection device detects change of at least one of the first polarization component and the second polarization component of the illumination light between before and after the illumination light passes through the detection subject or between before and after the illumination light is reflected by the detection subject.

In the defect detection apparatus of the embodiment, illumination light (for circularly polarized light or elliptically polarized light) including two linearly polarized lights having polarization directions perpendicular to each other may be irradiated, the changes of polarization conditions of the linearly polarized light included in transmission light and reflection light of the illumination light may be detected, and the defect detection may be performed based thereon.

For example, when the circularly polarized light is used as the illumination light, the strength ratio of the two linearly polarized lights having polarization directions perpendicular to each other before transmission or reflection of the illumination light may be 1. When the change in polarization occurs in transmission light or reflection light, the strength ratio of the two linearly polarized lights having polarization directions perpendicular to each other after transmission or reflection of the illumination light may not be 1. This phenomenon may be generated when there are a circuit pattern and a defect. Therefore, the defect can be detected by eliminating the change in the polarization due to the circuit pattern.

According to another aspect of the present invention, a defect detection method for a circuit pattern includes: an illumination light irradiation step in which illumination light, having a predetermined polarization condition, is irradiated onto a detection subject having a circuit pattern formed thereon; a detection step in which change in the polarization condition of the illumination light is detected, the change being between before and after the illumination light passes through the detection subject or between before and after the illumination light is reflected by the detection subject; and a defect detection step in which a defect in the circuit pattern is detected based on a result of the detection step.

According to another aspect of the present invention, a program which is read and executed by a computer includes: an illumination light irradiation function in which illumination light, having a predetermined polarization condition, is irradiated onto a detection subject having a circuit pattern formed thereon; a detection function in which change in the polarization condition of the illumination light is detected, the change being between before and after the illumination light passes through the detection subject or between before and after the illumination light is reflected by the detection subject; and a defect detection function in which a defect in the circuit pattern is detected based on an output of the detection function.

According to the present invention, techniques that can detect defects in circuit patterns with high signal-to-noise ratios can be provided.

### BRIEF DESCRIPTION OF THE DRAWINGS

Fig. 1 is a conceptual diagram schematically showing a defect detection apparatus for circuit patterns of an embodiment according to the present invention.
Fig. 2 is a block diagram showing a construction of the control system of the defect detection apparatus.
Fig. 3 is a flow chart showing an example of processing order of detection of a circuit pattern.
Fig. 4 shows photographs obtained by imaging a circuit pattern.
Fig. 5 is a conceptual diagram schematically showing a defect detection apparatus for a circuit pattern of an embodiment according to the present invention.
Fig. 6 shows photographs obtained by imaging of a circuit pattern.

### DESCRIPTION OF THE PREFERRED EMBODIMENTS

### 1. First embodiment

### 1.1. Construction of optical system

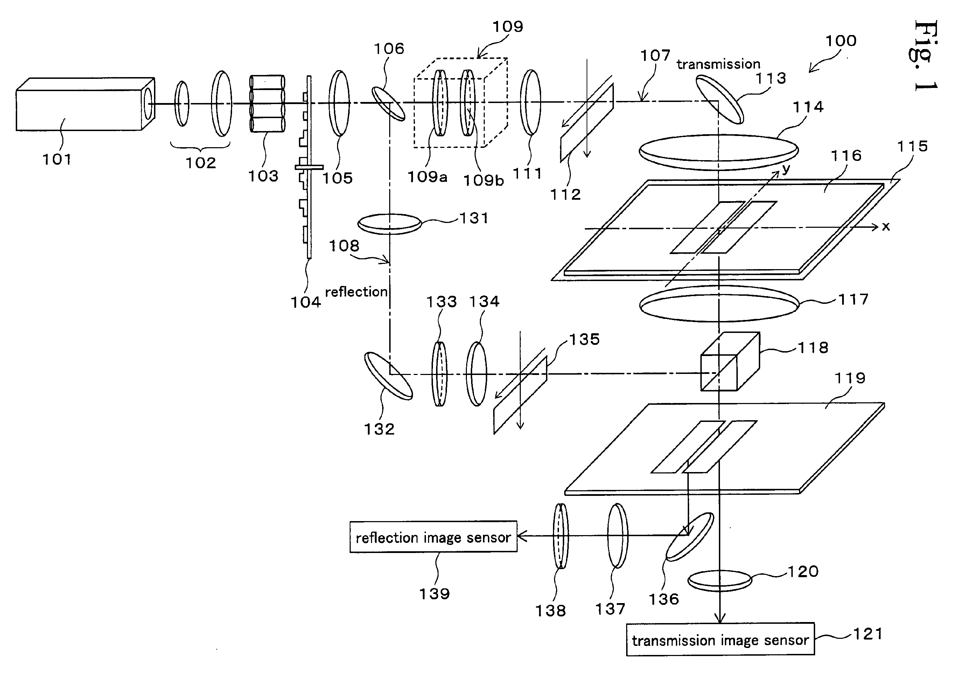

Fig. 1 is a conceptual diagram schematically showing a defect detection apparatus for circuit patterns of an embodiment according to the present invention. Fig. 1 shows a defect detection apparatus 100 for circuit patterns (hereinafter simply referred to as "defect detection apparatus 100"). The defect detection apparatus 100 is equipped with a CW laser (Continuous Wave laser) generation device 101 which generates illumination light. The CW laser generation device 101 outputs a laser beam which is used as illumination light. The wavelength of the laser beam is not particularly limited. For example, the wavelength may be 199 nm or 257 nm since a short wavelength beam is advantageous in order to improve detection accuracy.

The laser beam output from the CW laser generation device 101 passes through a beam expander 102, a fly eye lens 103, and a rotational phase plate 104. The beam expander 102 adjusts a beam shape of the illumination light. The fly eye lens 103 and the rotational phase plate 104 equalize strength distribution of the illumination light.

The illumination light that passes through the rotational phase plate 104 is divided by a half mirror 106 via a relay lens 105. In this case, the divided illumination lights travel to an optical path 107 of a transmission observation system and to an optical path 108 of a reflection observation system. The illumination light traveling to the optical path 107 of the transmission observation system passes through a polarization adjustment device 109 and arrives from a collector lens 111 at a field diaphragm 112.

The polarization adjustment device 109 can freely adjust polarization light. For example, the polarization adjustment device 109 has a light polarizer 109a and a quarter wavelength plate 109b. The light polarizer 109a is a linear polarization plate (linear polarization filter) that selectively allows linearly polarized light having an amplitude direction of the electric field to pass therethrough. In this case, the amplitude direction is a predetermined direction. The quarter wavelength plate 109b converts the linearly polarized light, which passed through the light polarizer, to circularly polarized light. The light polarizer 109a and the quarter wavelength plate 109b can be removably provided on the optical path. The light polarizer 109a can rotate. The light polarizer 109a and the quarter wavelength plate 109b are disposed on the optical path in turn from the incident side, so that the polarization adjustment device 109 outputs circularly polarized light. In this case, the light polarizer 109a is rotated, so that polarization direction of the circularly polarized light can be reversed. Alternatively, only the light polarizer 109a is disposed on the optical path and is rotated, so that linearly polarized light having an arbitrary amplitude direction can be selected. The light polarizer 109a and the quarter wavelength plate 109b can be removed from the optical path. A half-wavelength plate can be used instead of the quarter wavelength plate 109b, and linearly polarized light having an arbitrary amplitude direction can be selected by combination of the light polarizer 109a and the half-wavelength plate. Radial direction and radial direction polarization can be selected by combination of various optical systems.

The collector lens 111 can produce parallel light, and illumination light that passed through the collector lens 111 is irradiated onto the field diaphragm 112. The field diaphragm 112 can adjust the illumination light shape so that the illumination light can have a predetermined beam cross sectional shape.

The illumination light that passed through the field diaphragm 112 is reflected by a mirror 113 and the illumination light is irradiated onto a photomask via a condenser lens 114. The condenser lens 114 is a collector lens. The photomask is disposed on a stage 115. The stage 115, which is composed of material transparent to the illumination light, is an X-Y stage having a rotational function. The stage 115 can move in the X-direction and in the Y-direction and the stage 115 can rotate by a motor and a driving mechanism (not shown in Fig. 1).

The photomask 116 is used for circuit pattern printing used in a lithography process in production of an integrated circuit. A pattern is formed on the photomask 116 for formation of a predetermined circuit pattern. Two regions on the photomask 116 shown in Fig. 1 correspond to field diaphragms 112 and 135, and Fig. 1 shows that the regions are provided as a region for obtaining a transmission image and as a region for obtaining a reflection image, and positions of the images are slightly different.

The light which passed through the photomask 116 forms an image on an imaging surface 119 via an objective lens 117 and a beam splitter 118. The beam splitter 118 will be described hereinafter. The image formed on the imaging surface 119 is imaged by a transmission image sensor 121 via a variable magnification lens 120. The variable magnification lens 120 adjusts the scale size of the image. The transmission image sensor 121 is an imaging sensor which has light receiving elements disposed in the manner of a two-dimensional array architecture.

The illumination light, which was divided by the half mirror 106 and traveled to the optical path 108 of the reflection observation system, passes through a relay lens 131, and the illumination light is reflected by a mirror lens 132 and passes through a light polarizer 133. The light polarizer 133 is a linear polarization plate (linear polarization filter) that selectively allows linearly polarized light having an amplitude direction of the electric field to pass therethrough. In this case, the amplitude direction is a predetermined direction. The light polarizer 133 can rotate. The polarization direction of linearly polarized light (illumination light), which is irradiated onto the stage 115 from a lower direction in Fig. 1, can be adjusted.

The illumination light, which is linearly polarized in a predetermined direction by the light polarizer 133, becomes parallel light by a collector lens 134. The size of the illumination light which passed through the collector lens 134 is adjusted by a field diaphragm 135, and the illumination light is reflected toward the obj ective lens 117 by the beam splitter 118. The illumination light is irradiated from the objective lens 117 to the lower side of the photomask 116 shown in Fig. 1.

The illumination light, which run on the optical path 108 of the reflection observation system and was irradiated from the lower side in Fig. 1, is reflected by the photomask 116 and passes through the obj ective lens 117 downwardly in Fig. 1. The illumination light passes through the beam splitter 118, arrives at the imaging surface 119, and forms an image thereon.

The image by the illumination light from the reflection observation system is imaged by a reflection image sensor 139 via a mirror 136, a variable magnification lens 137, and a light polarizer 138. The variable magnification lens 137 adjusts the scale size of the image. The reflection image sensor 139 is the same as the transmission image sensor 121. The light polarizer 138 has the same optical parts as the light polarizer 133. The light polarizer 138 is rotated in synchronization with the light polarizer 133 so that polarization direction of the light polarizer 138 is perpendicular to that of the light polarizer 133. 1.2. Construction of control system

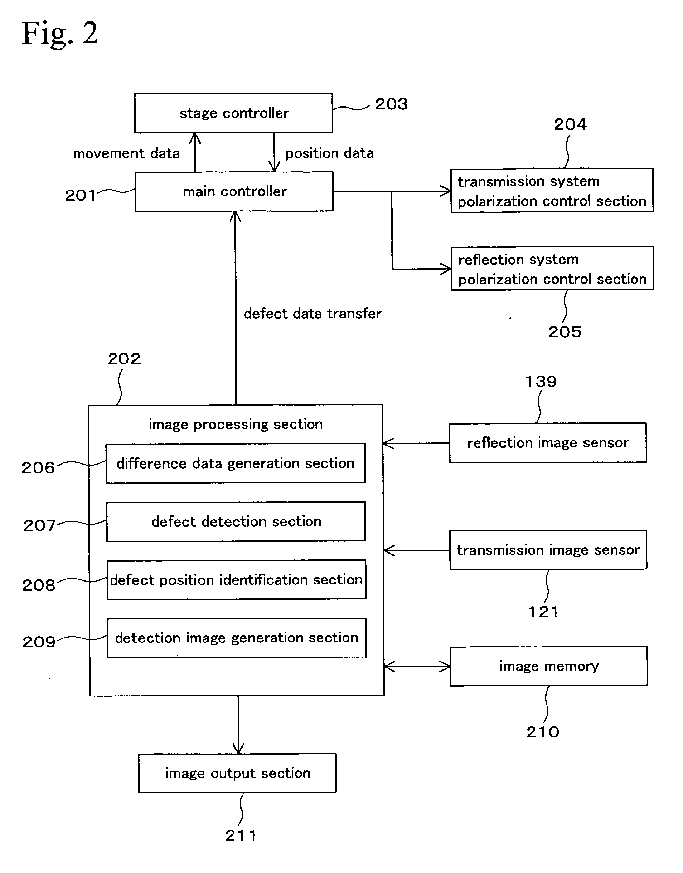

Fig. 2 is a block diagram showing a construction of the control system of the defect detection apparatus 100 shown in Fig. 1. The control system of the defect detection apparatus 100 is equipped with a main controller 201 and an image processing section 202. The main controller 201 and the image processing section 202 function as a computer, and have a CPU, a memory, and an interface circuit. In this example, the main controller 201 and the image processing section 202 are separately specified in accordance with the functions from the view point of hardware. The control system may have a structure such that the functions may be realized by software.

The main controller 201 outputs a control signal to a stage controller 203 which controls the movement of the stage 115 shown in Fig. 1. The movement of the stage 115 is controlled by the control signal. The main controller 201 outputs a control signal to a transmission system polarization control section 204 and a reflection system polarization control section 205.

The transmission system polarization control section 204 controls the action of the polarization adjustment device 109 shown in Fig. 1. That is, the transmission system polarization control section 204 adjusts an optical system in the polarization adjustment device 109, so that polarization condition of the illumination light in the transmission observation system is adjusted.

The reflection system polarization control section 205 controls the rotation of light polarizers 133 and 138 shown in Fig. 1 based on the control signal from the main controller 201.

Image data signals from the reflection image sensor 139 and the transmission image sensor 121 shown in Fig. 1 are input into the image processing section 202 shown in Fig. 1. In an image memory 210, image data, which is used as a reference in defect detection, and data of the pattern of the photomask are stored. The image memory 210 is also used for storage of data of processing image or the like.

The image processing section 202 has a difference data generation section 206, a defect detection section 207, a defect position identification section 208, and a detection image generation section 209. The difference data generation section 206 compares image data obtained by reflection image sensor 139 and the transmission image sensor 121 with image data which is a compared subject and is stored in the image memory 210.

The defect detection section 207 detects defect in the circuit pattern based on the output of the difference data generation section 206. The defect position identification section 208 identifies the position of the defect, which is detected by the defect detection section 207, in the circuit pattern of the photomask 116. The detection image generation section 209 generates image which displays the detected defect that is easily visible in the circuit pattern of the photomask 116. This image is output to an image output section 211 and is displayed on a display (not shown in Fig. 1). The image generated by the detection image generation section 209 is stored in the image memory 210.

### 1.3. Action

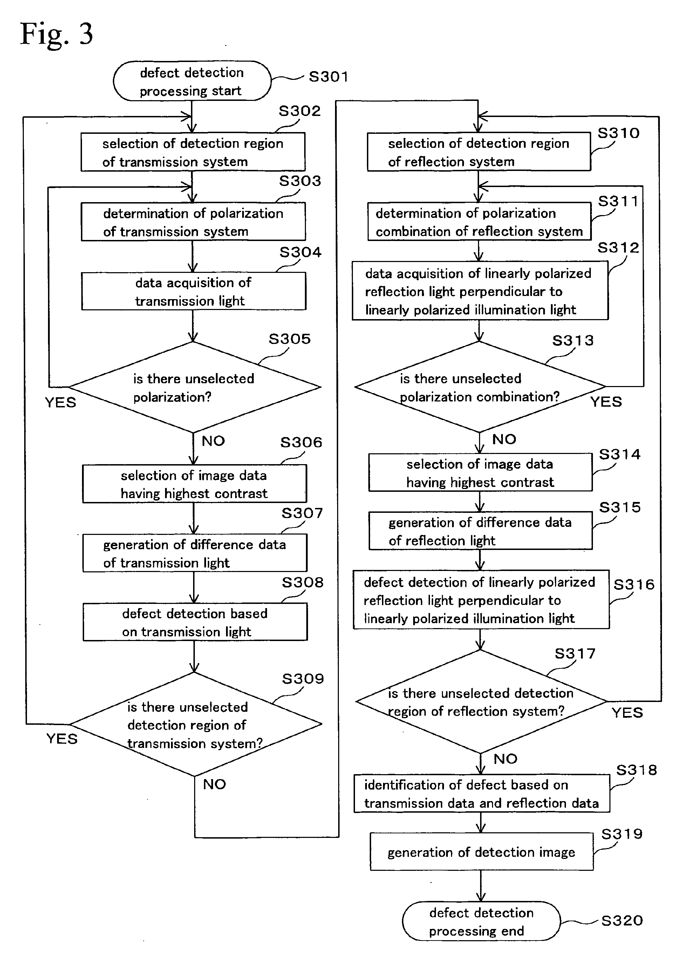

An example of an action performed by the control system shown in Fig. 2 will be explained hereinafter. A program for executing a flowchart shown in Fig. 3 is stored in a memory (not shown in the Figures) of at least one of the main controller 201 and the image processing section 202, and the program is executed by the main controller 201 and the image processing section 202.

First, the photomask 116 is mounted on the stage 115. When processing for detection of defect in the circuit pattern of the photomask 116 starts (in step S301), a region, in which the detection will be performed using the optical path 107 of the transmission observation system, is selected (in step S302). In this example, the detection is performed on divided plural regions of the circuit pattern. The region selected in step S302 is one of the divided plural regions on which the detection is not performed.

Next, the polarization used in the optical path 107 of the transmission observation system is set (in step S 303). In step S 303, the set polarization is freely selected from one of four kinds of linear polarization (for which each direction is set by 45 degrees), right circular polarization, or left circular polarization, or the like. This selection of the polarization is performed by the main controller 201. The main controller 201 outputs control signal to the transmission system polarization control section 204 based on this selection result. The transmission system polarization control section 204 receives this control signal and controls the action of the optical system of the polarization adjustment device 109.

When the polarization is set, a laser beam, which is illumination light, is generated by the CW laser generation device 101, and the photomask 116 is observed by using the optical path 107 of the transmission observation system. In this case, the illumination light passing though the photomask 116 is detected by the transmission image sensor 121, and image data of the transmission image of the region of the photomask 116, which was selected in step S302, (in step S304). In this case, the movement of the stage 115 is also controlled by the stage controller 203, and the obtained position of the image is adjusted. The obtained image data is stored in the memory 210.

Next, it is determined whether there is unselected polarization or not in the detection region used in this stage (in step S305). When there is unselected polarization, the processing returns to the stage previous to step S303, and the unselected polarization (another polarization) is selected. In this case, the processing after step S304 is performed again.

When there is no unselected polarization, the obtained transmission image data of the detected region, which correspond to each polarization, are read from the image memory, and the image data having the clearest contrast among the obtained transmission image data is selected therefrom (in step S306).

Next, step S307 is executed. In the image memory 210, reference image data of the observed region, which is produced from CAD data, is stored. In step S307, this reference image data and the image data selected in step S306 are compared, and difference therebetween is calculated. Specifically, the contrast ratio at each pixel is calculated. This processing is executed in the difference data generation section 206.

When the circuit pattern has a defect, differences between the reference image data and the image data selected in step S306 are generated, so that detection of the defect is performed based on these differences (in step S 308). Data of the obtained defect (data of defect position, data of contrast difference between the reference image data and the selected image data, and the like) are stored in an appropriate memory region.

Next, it is determined whether or not there is an unselected detection region in the transmission system (in step S309). When there is an unselected detection region, the processing returns to the stage previous to step S302, and the unselected detection region (another region) is selected. The processing after step S303 is performed for another region. When there is no unselected detected region, the processing goes to defect defection processing using the optical path 108 of reflection observation system, and the processing after step S310 is executed.

In step S310, a region, at which the detection will be performed using the optical path 108 of the reflection observation system, is selected. In this case, for example, three regions having the same circuit pattern are selected. This selection is performed based on CAD data of the circuit pattern stored in the image memory.

Next, combination of polarization used in the optical path 108 of reflection observation system is selected in step S311. The combination of polarization is a combination of polarization direction of the light polarizers 133 and 138. In this example, each polarization direction can be rotated by 45 degrees from a predetermined direction, and the four kinds of polarization direction can be set as polarization direction of the light polarizer 133. In this case, the polarization direction of the light polarizer 138 is perpendicular to that of the light polarizer 133. The main controller 201 selects unselected one from the four kinds of the polarization direction. The main controller 201 outputs a control signal to the reflection system polarization control section 205 based on this selection result. The reflection system polarization control section 205 receives this control signal and controls the rotation of the light polarizers 133 and 138.

When the combination of the polarization directions of the light polarizers 133 and 138 is set, a laser beam, which is illumination light, is generated by the CW laser generation device 101, and the photomask 116 is observed by using the optical path 108 of the reflection observation system. In this case, the illumination light reflected on the lower surface side of the photomask 116 is detected by the reflection image sensor 139, and image data of the reflection image of the region of the photomask 116, which is selected in step S310, is obtained (in step S312). In this case, the movement of the stage 115 is also controlled by the stage controller 203, and the position, at which the image is obtained, adjusted.

In the observation of the photomask 116 by using the optical path 108 of reflection observation system, linearly polarized light, in polarization direction is perpendicular to that of the incident light, is detected. Polarization change, which is generated when illumination light is reflected by the photomask 116, is detected.

Next, it is determined whether or not there is unselected combination of polarization in the detection region used in this stage (in step S313). When there is unselected combination of polarization, the processing returns to the stage previous to step S311, and the unselected combination of polarization (another combination of polarization) is selected. In this case, the processing after step S311 is performed again.

When there is no unselected combination of polarization, obtained reflection image data (combination of data at three positions) of the detected region which correspond to each combination polarization are read from the image memory, and a group of image data having the clearest contrast of the obtained reflection image data is selected therefrom (in step S314).

Next, the image data of the selected three positions are compared, and difference data therebetween is generated (in step S315). This processing is executed in the difference data generation section 206. When the difference data is obtained, defect detection processing is executed (in step S316). When the circuit pattern has a defect, the image data of reflection light at three circuit patterns are not the same (in a case in which there may not be the same defect at the same position), and a strength difference is generated at the difference data corresponding to the image. In this case, the difference data is imaged, an image having a contrast is obtained. On the other hand, when the circuit pattern has no defect, the image data of reflection light at three circuit patterns are the same, and no difference is generated, and an image obtained from difference data has no contrast. The defect detection based on this principle is performed by the defect detection section 207.

The three regions which are the same are selected, and they are compared with each other, so that a region having a defect can be determined from the three regions. This processing is executed by the defect position identification section 208. Obtained data about the defect is stored in an appropriate memory region.

Next, it is determined whether or not there is unselected detection region in the reflection system (in step S317). When there is an unselected detection region, the processing returns to the stage previous to step S310, and combination of unselected detection regions (other regions) is selected. The processing after step S311 is performed for the other regions. When there is no unselected detected region, the processing goes to step S318.

In step S318, the defect in the photomask 116 is identified based on information of the defect calculated in step S308 and information of the defect calculated in step S316. In this case, the position of the defect is identified by the defect position identification section 208.

Next, an image (detection image), which shows the position of the defect in the circuit pattern of the photomask 116, is generated by image processing based on the result of the processing in step S318. This processing is executed by the detection image generation section 209. The generated detection image is stored in the image memory 210. If necessary, the generated detection image is transmitted to the image output section 211, and is displayed on the display. After the above processing is performed, the defect detection processing is completed (in step S320).

### 1.4. Preferableness of Embodiment

The information on defect calculated in step S308 is obtained by the same principle as the detection method for defects based on typical optical observation image. This is a method in which defect is detected from the optical visual difference obtained by comparison between an optical observation image and a reference image. This method is suitable for detection of relatively large defects, but it is unsuitable for detection of small defect as explained in the "BACKGROUND OF THE INVENTION" of this application.

On the other hand, the information about the defect calculated in step S316 uses the change in polarization of the linearly-polarized light. That is, the information of the defect calculated in step S316 uses phenomenon that illumination light, which is linearly polarized light having a predetermined polarization direction, is converted to reflection light, which is linearly polarized light having a polarization direction perpendicular to the predetermined polarization of the illumination light, due to the circuit pattern, the defect, or the like when the illumination light is irradiated onto the circuit pattern of the photomask 116. This phenomenon is generated by the birefringence effect based on structures of the circuit pattern, the defect, and the like. The smaller the sizes of the structures than the wavelength of the illumination light, the greater (more pronounced) this phenomenon is. Therefore, this method is suitable for detection of small defect.

However, such birefringence effect is not relatively distinguishing in large structures. Due to this, this method is unsuitable for detection of large defects.

In this embodiment, in the transmission system, the typical principle of the optical detection is used, and in the reflection system, the principle of the polarization change detection is used. Thus, the above priority of both the optical detection and the polarization change detection are made for each other, and the defect detection is performed effectively regardless of the defect size.

As described above, in this embodiment, for example, linearly polarized light having an X-direction polarization is irradiated onto the photomask 116 as illumination light, and reflection light thereof is detected via light polarizer allowing linearly polarized light having a Y-direction polarization to pass therethrough. When the circuit pattern of the photomask 116 has a defect, the polarization condition is changed in the reflection, and linearly polarized light component having a polarization direction perpendicular to that of the illumination light is generated. The defect detection is performed based on the generated linearly polarized light component. The polarization change is sensitive to fine patterns, so that the defect detection of the circuit pattern can be performed with high signal-to-noise ratio.

### 1.5. Measurement Data

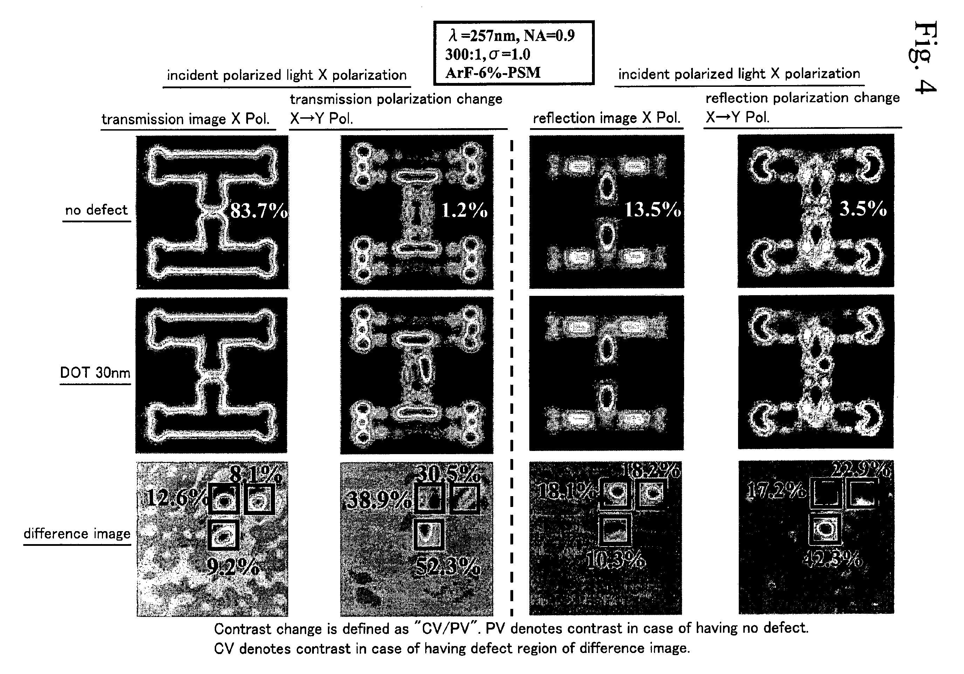

Fig. 4 shows photograph images which show one example of obtained image data. The photograph images are ones subjected to image processing using software. Fig. 4 shows images of a photomask which has a test circuit patter formed thereon and is used as a detected subject. One image shown in Fig. 4 has a size of 1.8 X 1.8 µm². X and Y denote polarization directions perpendicular to each other.

In Fig. 4, "transmission image X Pol." denotes a transmission image obtained when linearly polarized light having X-direction polarization is irradiated. This transmission image corresponds to the detected image obtained by using the optical path 107 of the transmission observation system shown in Fig. 1. In the image of "transmission image X Pol.", polarization change is not detected.

In Fig. 4, "transmission polarization change X → Y Pol." denotes an image obtained by observation of transmission light of linearly polarized light having a Y-polarization direction when linearly polarized light having an X-direction polarization is irradiated (enters). In Fig. 4, "transmission polarization change X → Y Pol." denotes an image obtained by detection of light component of which a polarization direction changes from an X-direction to Y-direction by using transmission light.

In Fig. 4, "reflection image X Pol." denotes a reflection image obtained when linearly polarized light having an X-direction polarization is irradiated. In the image of "reflection image X Pol.", polarization change is not detected.

In Fig. 4, "reflection polarization change X → Y Pol." denotes an image obtained by observation of reflection light having a Y-direction polarization when linearly polarized light having an X-direction polarization is irradiated (enters). This reflection image corresponds to the detected image obtained by using the optical path 108 of the reflection observation system. In Fig. 4, "reflection polarization change X → Y Pol." denotes an image obtained by detection of a light component of which the polarization direction changes from X-direction to Y-direction by using reflection light.

At the top in Fig. 4, images obtained in the case of the photomask having no defect are shown, at the middle in Fig. 4, images obtained in case of the photomask having a deliberately formed defect are shown, and at the bottom in Fig. 4, difference images between the images of the top and the images of the middle are shown. The difference images are obtained by image processing such that the contrast ratio of each corresponding pixel of the images of the top and the images of the middle are shown by shading. The values in each difference image denotes contrast ratio. The higher the values, the clearer the images obtained.

### 1.6 Bases obtained from measurement data

In the observation of the change in the polarization, the image is obtained even when the circuit pattern of the photomask has no defect. This result indicates that a change in the polarization is generated even when the circuit pattern of the photomask is a normal circuit pattern having no defect.

It is indicated that the difference images are obtained, so that data of the normal circuit pattern is eliminated, and the defect, which becomes an irregular pattern, is prominently detected. This defect contrast is remarkably clearer in a case of "transmission polarization change X → Y Pol." in which the change in the polarization is detected than in a case of "transmission image X Pol." in which the change in the polarization is not detected. This is the same as in case of the reflection light, and the defect contrast is remarkably clearer in a case of "reflection polarization change X → Y Pol." in which the change in the polarization is detected than in a case of "reflection image X Pol." in which the change in the polarization is not detected.

The values described in the photographs of the top in Fig. 4 denote ratios of light amount with respect to illumination light. For example, in the image at the top and leftmost side of Fig. 4, obtained light amount of the reflection light is 83.7% of light amount of irradiated illumination light.

The following conclusions were drawn from the values of the photographs at the top side of Fig. 4. First, when the image of the circuit pattern is obtained, the optical strength is greater in the case of using the transmission image. This case is advantageous in that a clearer image can be obtained. When the change in polarization is detected, the detected light is stronger in a case of detection of the reflection light. This case is advantageous in defect detection using the change in polarization. The following should be noted. That is, the values in the difference images may not be consistent with the above conclusions, but normalized standards of the values of the difference image are different between the case of the transmission and the case of the reflection, so that direct comparison therebetween may be invalid. It is important that as the detected light becomes stronger (the larger the detected light amount), the detection accuracy (the detection sensitivity) becomes greater.

### 2. Second embodiment

In the first embodiment, polarization change may be detected by using transmission light, and an optical image in which the change in the polarization is not detected may be obtained by using reflection light. In this case, the polarization adjustment device 109 is disposed instead of the light polarizer 133, and the light polarizer 133 is disposed instead of the polarization adjustment device 109. The light polarizer 138 is disposed before the transmission image sensor 121. The functions of the transmission image sensor 121 and the reflection image sensor 139 are changed with each other.

### 3. Third embodiment

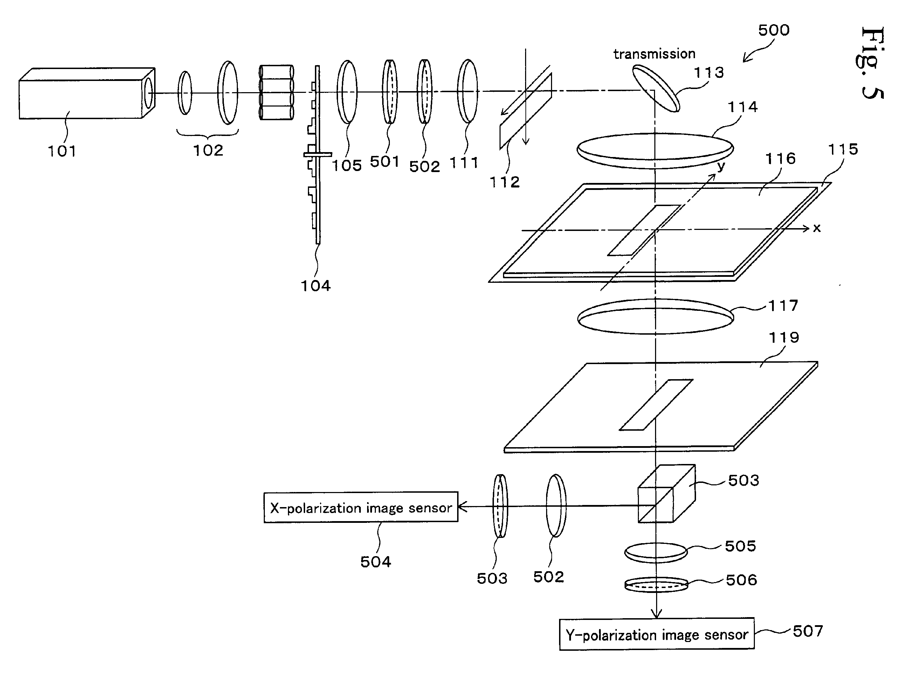

In a method for detecting defects in circuit patterns by using circular polarization, circularly polarized light is irradiated, images of linearly polarized light components which are included in the transmission light and are perpendicular to each other, are obtained, and differences between the images thereof are obtained. Fig. 5 shows an apparatus 500 which performs inspection for defects in photomasks by using this method.

In Fig. 5, the defect detection apparatus 500 for circuit patterns is shown. In the defect detection apparatus 500, the same reference numerals in Fig. 5 as those in Fig. 1 denote the same components, so that the explanation of these same reference numerals in Fig. 5 is omitted. In the defect detection apparatus 500, a light polarizer 501 and a quarter wavelength plate 502 are disposed in an optical path of illumination light. The illumination light passes through the light polarizer 501 and the quarter wavelength plate 502, thereby being changed to circularly polarized light.

The illumination light changed to circularly polarized light is irradiated onto the photomask 116, the transmission light forms an image on the imaging surface 119. The image formed on the imaging surface 119 is divided to X-linearly polarized light and Y-linearly polarized light, of which the polarization directions are perpendicular to each other, by a polarization beam splitter 503. The X-linearly polarized light is detected by an X-linear polarization image sensor 504 via a magnification lens 502 and an X-light polarizer 503 which allows linearly polarized light having an X-direction to pass therethrough. The Y-linearly polarized light is detected by a Y-linear polarization image sensor 507 via a magnification lens 505 and a Y-light polarizer 506 which allows linearly polarized light having a Y-direction to pass therethrough. The X-light polarizer 503 and the Y-light polarizer 506 are disposed for increase of extinction ratio.

In this example, differences between the images obtained by the X linear polarization image sensor 504 and the image obtained by the Y linear polarization image sensor 507 are obtained, so that a difference image is obtained. In this difference image, the effects due to the polarization change are observed more clearly than the image before the acquisition of the difference. The difference images are obtained among plural regions having the same circuit patterns, and the difference images are compared. When the circuit pattern has no defect, the difference images are the same. When the circuit pattern has a defect, the difference images are different. X-Y difference images having the same circuit patterns at different positions are obtained, and difference image between the X-Y difference images is obtained, so that defects can be detected. 3.1 Measurement data

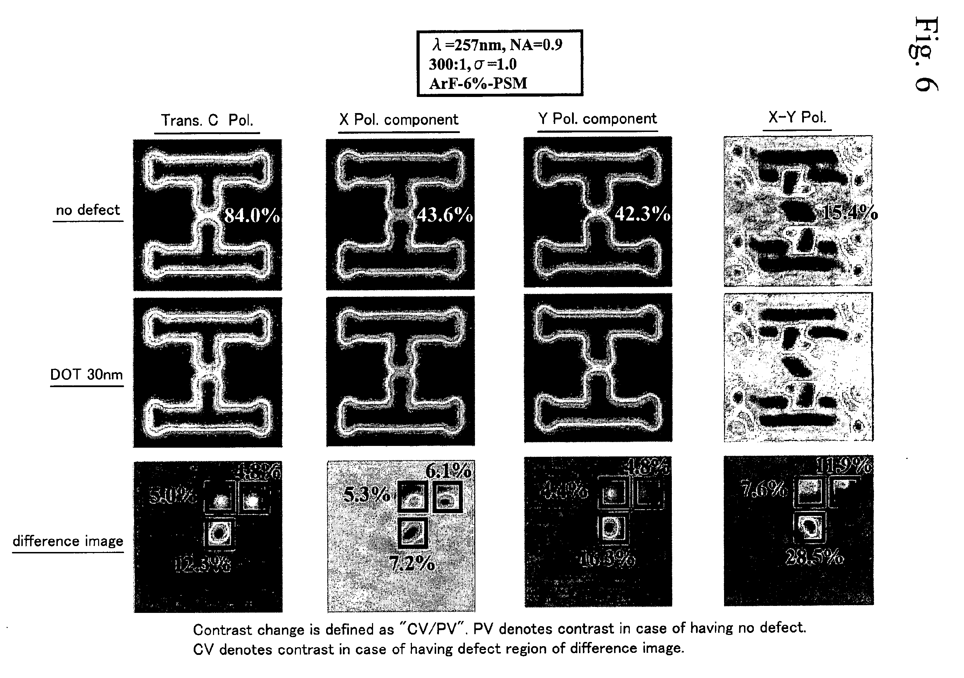

Fig. 6 shows one example of image photograph obtained when circularly polarized light is irradiated onto a photomask for test, and transmission light is observed. In Fig. 6, the "Trans. C Pol" denotes a case in which image of circularly polarized light is detected. The "X Pol. component" denotes a case in which image of linearly polarized light having an X-direction is detected. The "Y Pol. component" denotes a case in which image of linearly-polarized light having an Y-direction is detected. The "X-Y Pol." denotes a case in which difference between the image of linearly-polarized light having an X-direction and the image of linearly polarized light having a Y-direction is obtained. The image at the bottom of the "X-Y Pol." is obtained by difference between the image at the top of the "X-Y Pol." and the image at the middle of the "X-Y Pol.".

In Fig. 6, the "DOT 30 nm" denotes a case in which a defect having a diameter of 30 nm is deliberately formed on the photomask. At the bottom, the difference image obtained by the difference between the image at the top and the image at the middle is shown. One side of each image corresponds to 1.8 µm. 3.2 Bases obtained from measurement data

In comparison of the difference image of the "Trans. C Pol" and the difference image of the "X-Y Pol.", a defect can be clearly detected in the difference image of the "X-Y Pol." Thus, circuit pattern can be detected with higher accuracy by change in polarization.

### 3.3 Other matters

In the order of the processing shown in Fig. 3, setting of the polarization on each optical path is selected based on conditions for obtaining of high contrast in each case. However, when best polarization conditions are obtained beforehand, the setting condition may be determined, and the polarization condition may be set based thereon.

When materials (a surface of a silicon wafer having a circuit pattern, transfer mold for IC production (pressing mold for transfer of a circuit pattern on a resist surface), and the like), which are not transparent to the illumination light, are used for a irradiated subject, polarization change and observation image are obtained by reflection light. In this case, an optical observation image, in which polarization change is not detected, is also obtained by using reflection light.

In the third embodiment, only linearly polarized light having one direction is used, and polarization change may be detected. Instead of transmission light used In Fig. 5, defect detection using principles of the third embodiment can be performed by using reflection light from the detection subj ect.

As clearly shown in Fig. 4, in a case in which the circuit pattern has no defect, even when a difference image between the obtained image and the reference image is not obtained, asymmetry properties due to the defect emerges in the obtained image. The defect detection can be performed by using this phenomenon. In this case, the defect detection can be performed without comparison processing between the obtained image and the reference image or between the obtained image and another same circuit pattern portion. The defect detection may be performed by using a combination of plural methods disclosed in the description of the application.

### Industrial Applicability

The present invention can be used for techniques for detection of defects in circuit patterns of photmasks and the like.

## Claims

1. A defect detection apparatus for a circuit pattern, comprising:
an illumination optical system that irradiates illumination light, having a predetermined polarization condition, onto a detection subject having a circuit pattern formed thereon;
a detection device that detects change in the polarization condition of the illumination light between before and after the illumination light passes through the detection subject or between before and after the illumination light is reflected by the detection subject; and
a defect detection device that detects a defect of the circuit pattern based on an output of the detection device.

2. A defect detection apparatus for a circuit pattern, according to claim 1, wherein
the illumination optical system irradiates linearly polarized first light, which is the illumination light, onto the detection subject, and
the detection device detects linearly polarized second light having a polarization direction perpendicular to that of the linearly polarized first light, thereby detecting the change in the polarization condition of the illumination light between before and after the illumination light passes through the detection subject or between before and after the illumination light is reflected by the detection subject.

3. A defect detection apparatus for a circuit pattern, according to claim 1 or 2, wherein
the defect detection apparatus comprising:
an image acquisition device that obtains an image of the circuit pattern based on one of the illumination light passing through the detection subject and illumination light reflected by the detection subject.

4. A defect detection apparatus for a circuit pattern, according to claim 3, wherein
the circuit pattern is a circuit pattern formed on a photomask,
the illumination optical system has a transmission type illumination optical system that allows the illumination light to pass through the detection subject, and a reflection type illumination optical system which allows the illumination light to be reflected by the detection subject,
the image of the circuit pattern is obtained by using the transmission type illumination optical system, and
the change in the polarization condition is detected by using the reflection type illumination optical system.

5. A defect detection apparatus for circuit pattern, according to one of claims 1 to 4, wherein
the defect detection apparatus comprising:
a position identification device that identifies a position of the defect in the circuit pattern.

6. A defect detection apparatus for a circuit pattern, according to claim 1, wherein
the polarization condition of the illumination light includes a first polarization component and a second polarization component of which polarization directions are perpendicular to each other, and
the detection device detects change of at least one of the first polarization component and the second polarization component of the illumination light between before and after the illumination light passes through the detection subject or between before and after the illumination light is reflected by the detection subject.

7. A defect detection method for a circuit pattern, comprising:
an illumination light irradiation step in which illumination light, having a predetermined polarization condition, is irradiated onto a detection subject having a circuit pattern formed thereon;
a detection step in which change in the polarization condition of the illumination light is detected, the change being between before and after the illumination light passes through the detection subject or between before and after the illumination light is reflected by the detection subject; and
a defect detection step in which a defect in the circuit pattern is detected based on a result of the detection step.

8. A program which is read and executed by a computer, comprising:
an illumination light irradiation function in which illumination light, having a predetermined polarization condition, is irradiated onto a detection subject having a circuit pattern formed thereon;
a detection function in which change in the polarization condition of the illumination light is detected; the change being between before and after the illumination light passes through the detection subject or between before and after the illumination light is reflected by the detection subject; and
a defect detection function in which a defect in the circuit pattern is detected based on an output of the detection function.
